**Europäisches Patentamt**

**European Patent Office**

**Office européen des brevets**

(19)

(11) Veröffentlichungsnummer : **0 309 702 B1**

(12) # EUROPÄISCHE PATENTSCHRIFT

(45) Veröffentlichungstag der Patentschrift :
13.03.91 Patentblatt 91/11

(51) Int. Cl.⁵ : **B65H 29/04, B65G 23/30**

(21) Anmeldenummer : **88112970.4**

(22) Anmeldetag : **10.08.88**

(54) Endlos umlaufende Stückgut-Transportvorrichtung.

(30) Priorität : 02.10.87 CH 3854/87

(43) Veröffentlichungstag der Anmeldung :
05.04.89 Patentblatt 89/14

(45) Bekanntmachung des Hinweises auf die
Patenterteilung :
13.03.91 Patentblatt 91/11

(84) Benannte Vertragsstaaten :
AT CH DE FR GB IT LI NL SE

(56) Entgegenhaltungen :
WO-A-85/05089
CH-A- 610 276
US-A- 4 072 228

(73) Patentinhaber : **Ferag AG**
**CH-8340 Hinwil (CH)**

(72) Erfinder : **Eberle, Jürg**
**Bergstrasse 7**
**CH-8340 Hinwil (CH)**

(74) Vertreter : **Patentanwälte Schaad, Balass &**
**Partner**
**Dufourstrasse 101 Postfach**
**CH-8034 Zürich (CH)**

EP 0 309 702 B1

Jouve, 18, rue Saint-Denis, 75001 PARIS

## Beschreibung

Die vorliegende Erfindung betrifft eine endlos umlaufende Stückgut-Transportvorrichtung, insbesondere für Druckereiprodukte, gemäss dem Oberbegriff des Anspruches 1.

Eine solche Transportvorrichtung ist beispielsweise aus der CH-A 610 276 und der entsprechenden US-A 4.072.228 bekannt. Die Mitnehmer dieser Vorrichtung weisen Fahrgestelle auf, deren Räder paarweise in u-förmigen Schienen welche mit ihren Oeffnungen einander zugekehrt angeordnet sind, geführt sind. An den vorderen und hinteren Stirnwänden der Fahrgestelle sind Oeffnungen vorgesehen, welche von Verbindungsgliedern durchgriffen werden ; diese Verbindungsglieder tragen an ihren Enden Haken, welche Anschlagleisten an den Stirnwänden der Fahrgestelle umgreifen. Im Mittelbereich zwischen den Haken sind an den Verbindungsgliedern Puffer angeordnet. Jede Stirnwand ist zwischen dem Puffer und dem betreffenden Haken frei schiebbar. Der Antrieb der Mitnehmer erfolgt über Schneckenräder, welche, am Anfang und am Ende der förderwirksamen Strecke der Transportvorrichtung, auf Folgerollen, die an den Fahrgestellen angeordnet sind, einwirken. Die Antriebsgeschwindigkeit der ersten Schnecke ist durch den Takt der anfallenden Druckereiprodukte und jener der zweiten Schnecke vom Takt der Weiterverarbeitung gegeben. Der Unterschied der Fördergeschwindigkeiten am Anfang und am Ende der förderwirksamen Strecke der Transportvorrichtung wird durch die Schleppverbindung ausgeglichen. Dies kann zu einem unruhigen Lauf der Mitnehmer führen, weil die Beschleunigung und Bremsung der Fahrgestelle ruckartig infolge des Anschlagens an den Haken, respektive Puffern erfolgt.

Aufgabe der vorliegenden Erfindung ist es, eine endlos umlaufende Stückgut-Transportvorrichtung zu schaffen, die ruhige Laufeigenschaften aufweist und die einfacher ausgebildet ist.

Diese Aufgabe wird durch die Merkmale des kennzeichnenden Teiles des Anspruches 1 gelöst. Die Schleppverbindung zwischen den einzelnen Mitnehmern ist durch ein elastisch verkürzbares und verlängerbares Federelement gebildet. Dieses übt auf die benachbarten Mitnehmer, bei Verkleinerung bzw. Vergrösserung des Abstandes derselben bezüglich einem Normalabstand, eine stetig grösser werdende Druck- bzw. Zugkraft aus.

In einer bevorzugten Ausbildungsform ist das Federelement eine Biegefeder, welche durch einen Abschnitt eines endlosen Bandes gebildet ist, das von an den Mitnehmern angeordneten Befestigungselementen wellenförmig verformt ist. Für beide an einem Mitnehmer angeordneten Federelemente ist nur ein einziges Befestigungselement notwendig. Zudem werden alle Biegefedern durch Abschnitte eines einzigen endlosen Bandes gebildet, was die Herstellung und Montage stark vereinfacht.

In einer weiteren bevorzugten Ausführungsform weist jede Antriebsanordnung wenigstens eine auf Mitnehmer einwirkende Nockenscheibe auf, welche ein sägezahnartiges Umfangsprofil aufweisen, deren steile Flanken in Drehrichtung gesehen vorlaufend sind. Dadurch erfolgt die Kraft übertragung vom Nockenrad auf die Mitnehmer in ungefähr tangentialer Richtung und zudem verhindert die nachlaufende Flanke ein zu frühes Nachlaufen des nächsten Mitnehmers infolge der Zugkräfte vom vorlaufenden Mitnehmer.

In einer weiteren bevorzugten Ausführungsform ist jeder steilen Flanke eine Vertiefung unmittelbar vorgelagert, die ein gegengleich an jedem Mitnehmer angeformtes Mitnahmeorgan aufnimmt. Die Positionierung der Greifer wird dadurch sehr genau.

Wenn je eine Nockenscheibe pro Antrieb und Mitnahmeorgane der Mitnehmer zu beiden Seiten des Federelementes angeordnet sind, wird ein Verkanten der Mitnehmer in der Führung verhindert, was zu einem ruhigen Lauf der Mitnehmer beiträgt.

Ein Ausführungsbeispiel der Erfindung wird nun anhand der Figuren näher beschrieben. Es zeigen rein schematisch :

Fig. 1 in Seitenansicht eine verkürzt dargestellte Transportvorrichtung für Druckereiprodukte,

Fig. 2 und 3 in vergrössertem Massstab einen Schnitt entlang der Linien II-II bzw. III-III der Figur 1, und

Fig. 4 und 5 in Seitenansicht je einen Ausschnitt des rechten Teils der Vorrichtung gemäss Figur 1, wobei der Abstand zwischen den Greifern maximal bzw. minimal ist.

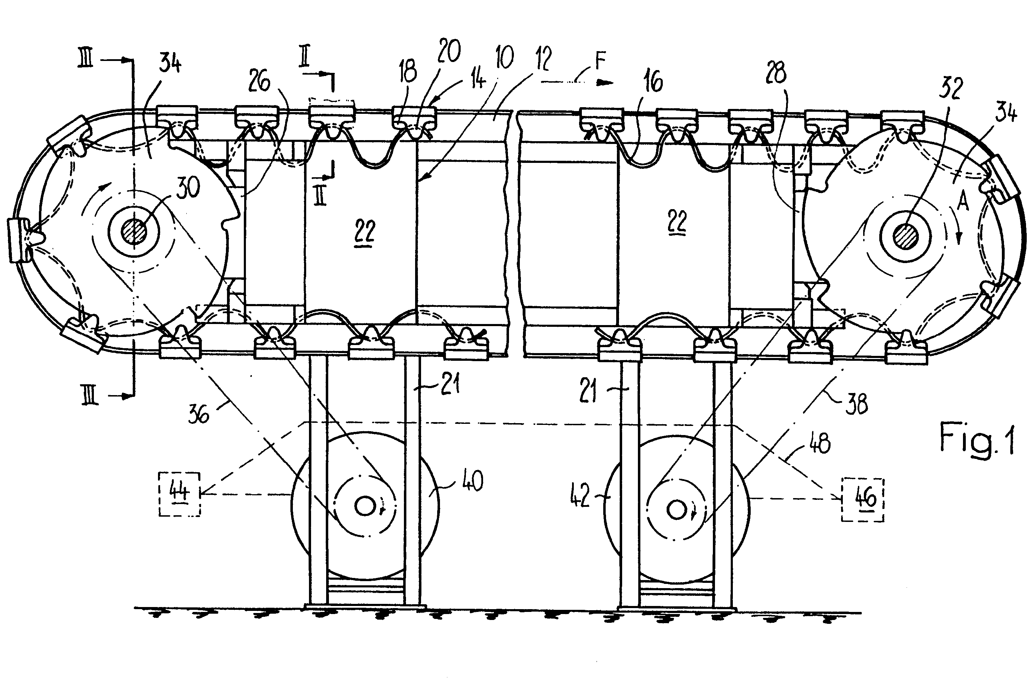

Figur 1 zeigt, in vereinfachter Darstellung und in Seitenansicht, eine Vorrichtung für den Transport von Druckereiprodukten, wie Zeitschriften, Zeitungen und dergleichen, wobei ein im wesentlichen gerader Mittelteil der Vorrichtung nicht dargestellt ist. An einem Gestell 10 ist eine umlaufende Führung 12 angeordnet, an welcher eine Anzahl von Mitnehmern 14 gleitend gelagert sind. Die Mitnehmer 14 sind in festen Abständen an einem endlosen Zahnriemen 16 befestigt, welcher von an den Mitnehmern 14 angeordneten Befestigungselementen 18 wellenförmig verformt ist. Jeder Mitnehmer 14 ist auf jeder Seite des Zahnriemens 16 mit einem Mitnahmeorgan 20 versehen.

Auf zwei Ständerpaaren 21 des Gestells 10 ist je ein Tragelement 22 abgestützt, an welchem die Führung 12 befestigt ist. Am Gestell 10 sind ebenfalls zwei Auslegerarme 26, 28 angeordnet, an denen je eine Drehwelle 30, 32 gelagert ist. Beidseitig der Auslegerarme 26, 28 ist jede Drehwelle 30, 32 mit einer Nockenscheibe 34 drehfest verbunden. Jede Drehwelle 30, 32 ist mittels einem strichpunktiert dargestellten Kettentrieb 36, 38 mit je einem Antriebsmotor 40, 42 wirkverbunden. An jedem Ständerpaar 21 ist einer der Antriebsmotoren 40 bzw. 42 angeordnet ; strichpunktiert sind zwei Regler 44, 46 angedeutet, die die Drehzahl der Antriebsmotoren 40 bzw. 42 steuern. Dies wird durch je eine gestrichelte Linie zwischen den Reglern 44, 46 und den Antriebsmotoren 40, 42 symbolisiert. Eine weitere gestrichelte Linie 48 zeigt eine elektrische Verbindung zwischen den Reglern 44, 46. Die Aufgabe dieser Verbindung wird weiter unten näher beschrieben. Mit A ist die Drehrichtung der Antriebsmotoren 40, 42 und Nockenscheiben 34 angegeben. Die förderwirksame Strecke der Mitnehmer 14 beginnt im Bereich der, an der Drehwelle 30 angeordneten Nockenscheibe 34 und endet im Bereich der, in der Figur rechts gezeigten Nockenscheibe 34. Sie definiert die Förderrichtung F.

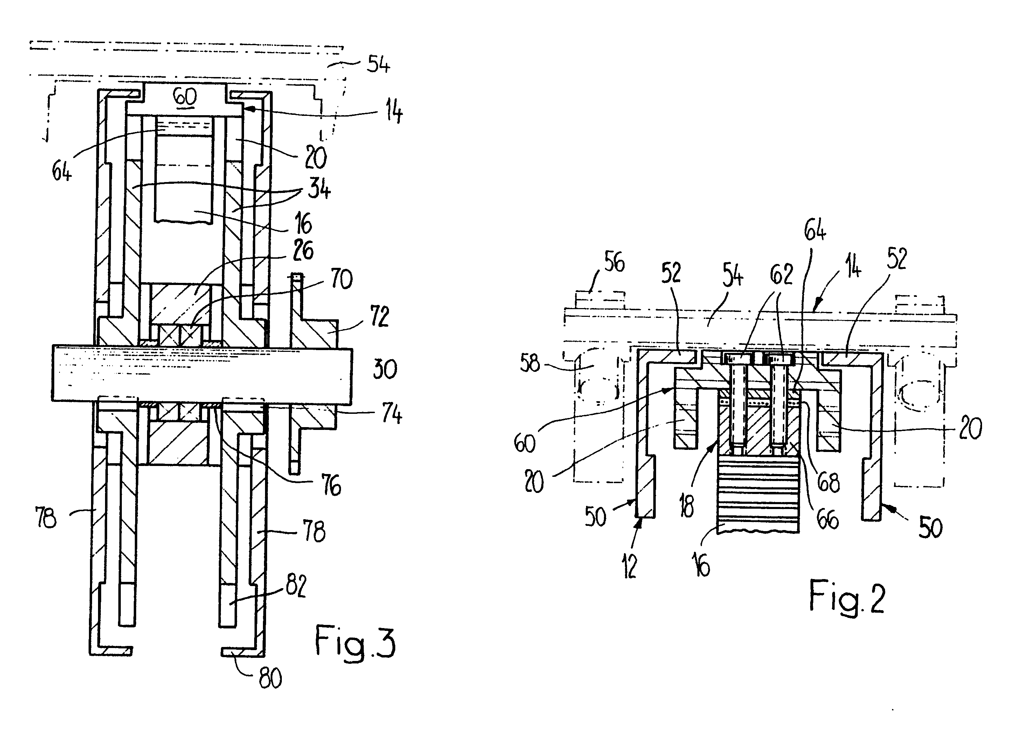

In der Figur 2 ist ein Schnitt durch einen Mitnehmer 14 und die Führung 12 entlang der Linie II-II der Figur 1 vergrössert dargestellt. Die Führung 12 weist zwei L-förmige Profile 50 auf, deren kürzere Schenkel 52 gegeneinander gerichtet sind. Auf den kürzeren Schenkel 52 gleitet ein Ausleger 54 der in dieser Figur strichpunktiert dargestellt ist. Ebenfalls strichpunktiert angedeutet sind die seitlich der L-Profile 50 am Ausleger 54 verschiebbar gelagerten Klammern 56. Die Klammern 56 sind mittels ebenfalls nur angedeuteten Federn 58 gegen den Ausleger 54 vorgespannt. Am Ausleger 54 ist mittels nicht dargestellten Schraubenbolzen ein die Schenkel 52 teilweise umfassender Gleitkörper 60 befestigt, an welchem die Mitnahmeorgane 20 angeformt sind. Mittels zweier Schraubenbolzen 62 ist das zwischen diesen Mitnahmeorganen 20 angeordnete Befestigungselement 18 befestigt. Es weist einen mit zwei Durchgangslöchern für die Schrauben versehenen Sattel 64, sowie einen Reiter 66 auf, in dem die Gegengewinde zu den Schraubenbolzen 62 angeordnet sind. Zwischen dem Sattel 64 und dem Reiter 66 ist der Zahnriemen 16 festgeklemmt. Mit 68 sind Einlagen im Zahnriemen 16 bezeichnet, welche beispielsweise Stahldrähte sind.

Figur 3 zeigt einen Schnitt entlang der Linie III-III der Figur 1. Die Drehwelle 30 ist mittels einem Kugellagerpaar 70 im Auslegerarm 26 drehbar gelagert. Ein Kettenrad 72 des Kettentriebes 36 ist an der Drehwelle 30 drehfest angeordnet. Zwei Nockenscheiben 34 sind mittels Keilen 74, welche in eine Keilbahn in der Drehwelle 30 eingreifen, mit dieser drehfest verbunden, und vom Kugellagerpaar 70 mittels je einer Hülse 76 beabstandet. Ebenfalls am Auslegerarm 26 sind zwei Führungsscheiben 78 angeordnet, welche an ihrem Rand zur Drehwelle 30 koaxiale, gegeneinander gerichtete weitere Schenkel 80 aufweisen. Diese Schenkel 80 an den Führungsscheiben 78 übernehmen die Führung der Mitnehmer 14 im Bereich der Nockenscheiben 34 in analoger Weise wie dies die Schenkel 52 der L-Profile 50 zwischen den, an den Drehwellen 30 und 32 angeordneten Nockenscheiben 34 tun, vgl. Figur 2. In der oberen Hälfte der Figur 3 ist ein Mitnehmer 14 gezeigt, der mittels dem strichpunktiert angedeuteten Ausleger 54 und dem Gleitkörper 60 an den weiteren Schenkeln 80 gleitend geführt ist und dessen Mitnahmeorgane 20 in Vertiefungen 82 in den Nockenscheiben 34 eingreifen. Der mittels des Reiters 66 und Sattels 64 am Gleitkörper 60 befestigte Zahnriemen 16 ist in dieser Figur unterbrochen dargestellt.

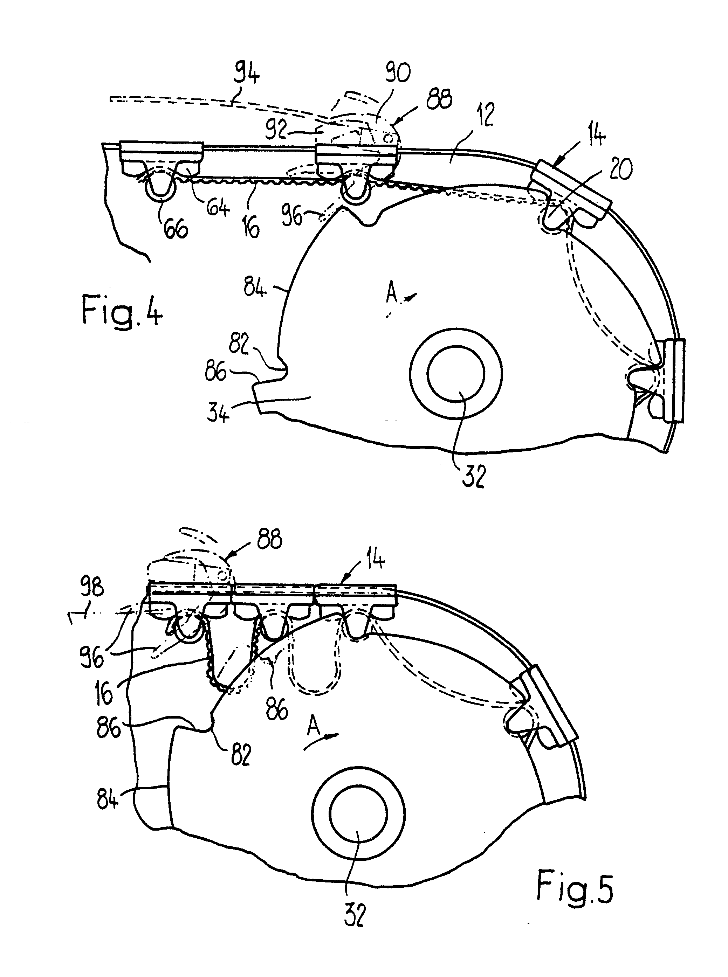

In den Figuren 4 und 5 ist ein Teil der Transportvorrichtung im Bereich der Drehwelle 32 stark vereinfacht dargestellt, vgl. Fig. 1. Die an der Drehwelle 32 drehfest angeordneten Nockenscheiben 34 weisen ein sägezahnartiges Umfangsprofil 84 auf, dessen steile Flanken 86 in Drehrichtung A gesehen vorlaufend sind. Jeder steilen Flanke 86 ist unmittelbar eine Vertiefung 82 vorgelagert. Wie schon weiter oben beschrieben, sind diese Vertiefungen 82 für die Aufnahme der gegengleich geformten Mitnahmeorgane 20 der Mitnehmer 14 bestimmt. In dieser Figur sind vier Mitnehmer 14 die miteinander mit dem Zahnriemen 16 verbunden und an der Führung 12 gleitend gelagert sind, dargestellt. Die Mitnahmeorgane 20 der beiden in Pfeilrichtung A gesehenen vordersten Mitnehmer 14, greifen in die Vertiefungen 82 in den Nockenscheiben 34 ein, während die Mitnahmeorgane 20 des dritten Mitnehmers 14 gerade vor dem Eingreifen in die entsprechenden Vertiefungen 82 dargestellt sind. In der Krümmung der Führung 12 ist der Abstand der Mitnehmer 14 von den Vertiefungen 82 in den Nockenscheiben 34 gegeben, während er im Bereich der förderwirksamen und nicht förderwirksamen Strecken zwischen den Nockenscheiben 34 durch die Anzahl der Mitnehmer 14 auf diesen Strecken bestimmt (siehe Figur 1) ist. In der Figur 4 ist der Abstand zwischen den dargestellten aber nicht mit den Vertiefungen 82 in Eingriff stehenden Mitnehmern 14 maximal, der Zahnriemen 16 ist gestreckt, während in der Figur 5 dieselben Mitnehmer 14 aneinander anstossen und der Zahnriemen 16 mäanderförmig verformt ist. In Förderrichtung A gesehen, ist in der Figur 4 am dritten Mitnehmer 14 und in der Figur 5 am vierten, ein Greiferorgan 88 strichpunktiert angedeutet. Selbstverständlich ist an jedem Mitnehmer 14 ein solches Greiforgan 88 angeordnet, der besseren Uebersicht halber, aber in den Figuren nicht dargestellt. Ein Klemmfinger 90 ist schwenkbar gelagert und gegen eine Klemmbacke 92 in Schliessrichtung vorgespannt. Zwischen dem Klemmfinger 90 und der Klemmbacke 92 ist eine gestrichelt angedeutete Zeitung 94 festgeklemmt. Der Klemmfinger 90 weist ein Folgeglied 96 auf, das beim Auflaufen auf seine Kulisse 98 (siehe Fig. 5) den Klemmfinger 90 in Oeffnungsrichtung verschwenkt und die Zeitung 94 freigibt. Ebenfalls strichpunktiert ist in der Figur 5 eine steile Flanke 86 dargestellt, welche um den halben Winkel zwischen zwei in ausgezogenen Linien dargestellten steilen Flanken 86 verschoben ist.

Mit Hilfe der Figuren 1, 4 und 5 wird nun die Funktion der Transportvorrichtung näher beschrieben. Die Zeitungen 94 werden in Schuppenformation von einem nicht dargestellten Zuförderer in den Anfangsbereich der Förderwirksamen Strecke der Transportvorrichtung transportiert, dort von den Greiferorganen 88 erfasst, in Förderrichtung F zum Endbereich der förderwirksamen Strecke gefördert, dort von einem ebenfalls nicht dargestellten Wegförderer zur Weiterarbeitung übernommen und wegtransportiert, wie dies in der weiter oben erwähnten CH-A 610 276 und der entsprechenden US-A 4.072.228 gezeigt und beschrieben ist. Der Antriebsmotor 40 wird vom Regler 44 derart gesteuert, dass im Takt des anfallenden Schuppenstromes von jedem Greiferorgan 88 eine Zeitung 94 dieses Schuppenstromes im Anfangsbereich der förderwirksamen Strecke des Transporteurs erfasst wird. Zu diesem Zweck werden die Klemmfinger 90 mittels einer nicht dargestellten Kulisse 98 in diesem Anfangsbereich in Oeffnungsstellung gehalten.

Aehnlich wie der Antriebsmotor 40 in Abhängigkeit vom Takt der zugeführten Zeitungen 94 gesteuert wird, so wird der Antriebsmotor 42 mittels des Reglers 46 vom Takt des Wegförderers bestimmt. Die Nockenscheiben 34 auf der Drehwelle 32 werden derart in Pfeilrichtung A gedreht, dass jede Zeitung 94 vom Wegförderer erfasst und abtransportiert werden kann. Kurzzeitige Taktunterschiede zwischen den zugeführten und weggeführten Zeitungen 94 sowie dauernde Phasenverschiebungen werden von der Transportvorrichtung übernommen. Zu diesem Zweck sind an der Führung 12 eine Anzahl von Mitnehmern 14 angeordnet, die in Folge der Biegefederwirkung des Zahnriemens 16 im Ruhezustand einem mittleren gegenseitigen Abstand derart einnehmen, dass der Zahnriemen 16 eine Wellenform aufweist. Ist der Abgabetakt grösser als der Uebernahmetakt, so vergrössert sich der Abstand zwischen den Mitnehmern 14 auf der förderwirksamen Strecke und auf der nichtförderwirksamen Strecke der Vorrichtung verringert er sich. Falls der Uebernahmetakt grösser ist als der Abgabetakt, so erfolgt auf der förderwirksamen Strecke ein Stau der Mitnehmer 14, währenddem sich ihr gegenseitiger Abstand auf der nichtförderwirksamen Strecke vergrössert. Einerseits kann der Abstand zwischen benachbarten Mitnehmern 14 solange vergrössert werden, bis der Zahnriemen 16 gestreckt ist, vgl. Figur 4, andererseits kann er solange verkleinert werden, bis die Mitnehmer 14 aneinander anstehen, vgl. dazu Fig. 5. Die Ueberwachung dieser Extremwerte geschieht durch die Regler 44 und 46 und ist mittels der Verbindung 48 symbolisch dargestellt. So kann beispielsweise der Unterschied der Drehzahlen der beiden Antriebsmotoren 40, 42 aufintegriert und mit einem maximal und einem minimal Wert verglichen werden, welche dem maximalen bzw. minimalen Abstand zwischen den Mitnehmern 14 entsprechen. Die Transportvorrichtung kann solange Unterschiede im Uebernahme- und Abgabetakt aufsprechen.

nehmen, bis einer dieser Extremwerte überschritten wird. Erst von diesem Moment an ist eine Verzögerung respektive Beschleunigung des Uebernahme oder Abgabetaktes notwendig. Der wellenförmig verformte Zahnriemen 16 wirkt zwischen benachbarten Mitnehmern 14 als Biegefeder. Wird der Abstand gegenüber dem mittleren Abstand verkleinert, so übt der Zahnriemenabschnitt zwischen zwei benachbarten Mitnehmern 14 eine Reaktionskraft auf die Mitnehmer 14 aus, die diese wieder in die ursprüngliche Lage mit mittlerem Abstand zurückversetzen möchte. Falls der Abstand zwischen Mitnehmern 14 grösser ist als der mittlere Abstand, so übt der Zahnriemen 16 einen Zug als Reaktionskraft auf die Mitnehmer 14 aus. Die Federwirkung des Zahnriemens 16 hat somit zur Folge, dass der Abstand zwischen den Mitnehmern 14 auf der förderwirksamen Strecke sowie auf der nichtförderwirksamen Strecke ausgeglichen wird. Da die Reaktionskräfte im Zahnriemen 16 sich stetig ändern, erfolgt dieser Ausgleich kontinuierlich, was wesentlich zur Laufruhe der Transportvorrichtung beiträgt. In diesem Zusammenhang ist wichtig, dass die Reibung zwischen den Mitnehmern 14 und der Führung 12 klein gehalten werden kann. Bestehen beispielsweise die auf der metallenen Führung 12 gleitenden Teile der Mitnehmer 14 aus Kunststoff, so ist dies durchaus der Fall. Selbstverständlich können auch andere Materialpaarungen verwendet werden.

Mit Hilfe der Figuren 4 und 5 wird nun das Positionieren der Mitnehmer 14 an den Nockenscheiben 34 näher beschrieben. Bei maximalem Abstand zwischen benachbarten Mitnehmern 14 erfolgt der Einlauf der Mitnahmeorgane 20 in die Vertiefungen 82 problemlos, da der Abstand der steilen Flanken 86 ungefähr gleich dem Maximalabstand zwischen den Mitnahmeorganen 20 bei gestrecktem Zahnriemen 16 entspricht. So werden die Mitnahmeorgane 20 der nachlaufenden Mitnehmer 14 von den vorlaufenden, bereits mit den Vertiefungen 82 in den Nockenscheiben 34 in Eingriff stehenden Mitnehmern 14 in die entsprechenden Vertiefungen 82 gezogen. Hat sich hingegen vor dem Einlauf in die Nockenscheiben 34 ein Stau gebildet, vgl. Figur 5, so müssen die Mitnehmer 14 zurückgehalten werden, bis eine nächste Vertiefung 82 für die Aufnahme eines Mitnahmeorganes 20 sich diesem nähert. Zu diesem Zweck gleiten die Mitnahmeorgane 20 an jenen Teil des Umfangsprofils 84 zwischen der steilen Flanke 86 und der nachgelagerten Vertiefung 82. Da sich der Abstand dieses Teiles des Umfangsprofils 84 zur Drehwelle 32 entgegen Pfeilrichtung A langsam verringert, bewegen sich die zurückgestauten Mitnehmer 14 langsam in Richtung des Pfeiles A bis die nächste Vertiefung 82 das Mitnahmeorgan 20 des vordersten gestauten Mitnehmers 14 erfasst und das Mitnahmeorgan 20 des nächst folgenden Mitnehmers 14 wiederum am nächsten flachen Abschnitt des Umfangsprofiles 84 ansteht.

Wie oben beschrieben, sind in den Figuren 4 und 5 die beiden Extremfälle mit maximalem und minimalem Abstand zwischen den Mitnehmern 14 dargestellt. Ueblicherweise entspricht der Abstand zwischen den Mitnehmern 14 dem mittleren Abstand. Auch in diesem Fall werden die Mitnehmer 14 jeweils leicht zurückgestaut, bis der nächste Mitnehmer 14 von den Nockenscheiben 34 erfasst werden kann. Auch in diesem Fall sorgt die stetige Aenderung der Reaktionskräfte im Zahnriemen 16 für einen ruhigen Lauf vor dem Einlaufen der Mitnahmeorgane 20 in die Vertiefungen 82.

Die Federeigenschaften des wellenförmig verformten Zahnriemens 16 werden im wesentlichen durch das Material des Zahnriemens 16 aber auch durch die Einlagen 68 bestimmt.

Es ist einleuchtend, dass die Federwirkung zwischen den Mitnehmern 14 mit andern Mitteln als mit einem Zahnriemen 16 erreicht werden kann. So könnte z.B. ein endloses Kunststoff oder Federstahlband auf dieselbe Weise wie der Zahnriemen 16 wellenförmig verformt werden, oder es könnte ein solches Band, das im nichtmontierten Zustand eine Wellenform aufweist, mit den Mitnehmern 14 gekoppelt werden. Ebenfalls wären andere Federelemente denkbar, die von einem Ruhezustand aus elastisch verkürzbar und verlängerbar sind. Solche einzelnen Federlemente haben aber den Nachteil, dass die Montage an den Mitnehmern 14 aufwendiger wird.

Es ist ebenfalls einleuchtend, dass an den Mitnehmern 14 jede Art von Mitnahmeorganen angeordnet sein kann, die anders aufgebaut sind als die Klammern 56 (Fig. 2) oder Greiferorgane 88 (Fig. 4 und 5).

## Ansprüche

1. Endlos umlaufende Stückgut-Transportvorrichtung, insbesondere für Druckereiprodukte, mit einer Anzahl in einer Führung umlaufender, aneinander mittels einer Schleppverbindung gekoppelter Mitnehmer (14), die am Anfang und am Ende ihrer förderwirksamen Strecke von je einer für sich steuerbaren Antriebsvorrichtung (34, 40, 42) angetrieben und in ihrer gegenseitigen Lage positionierbar sind, um den Uebernahmetakt unabhängig vom Abgabetakt zu regeln, dadurch gekennzeichnet, dass die Schleppverbindung zwischen den einzelnen Mitnehmern (14) durch ein elastisch verkürzbares und verlängerbares Federelement (16) gebildet ist.

2. Stückgut-Transportvorrichtung nach Anspruch 1, dadurch gekennzeichnet, dass die Mitnehmer (14) in der Führung (12, 50, 78) gleitend gelagert sind.

3. Stückgut-Transportvorrichtung nach Anspruch 1, dadurch gekennzeichnet, dass das Federelement (16) eine Biegefeder ist.

4. Stückgut-Transportvorrichtung nach Anspruch 3, dadurch gekennzeichnet, dass die Biegefeder zwischen zwei benachbarten Mitnehmern (14) eine Biegung mit wenigstens einem Scheitelpunkt aufweist.

5. Stückgut-Transportvorrichtung nach Anspruch 3, dadurch gekennzeichnet, dass die Biegefeder durch einen Abschnitt eines endlosen Bandes (16) gebildet ist, das von an den Mitnehmern (14) angeordneten Befestigungselementen (18, 64, 66), wellenförmig verformt ist.

6. Stückgut-Transportvorrichtung nach Anspruch 5, dadurch gekennzeichnet, dass das endlose Band (16) durch ein, mit einer Einlage versehenes Gummiband, z.B. einen Zahnriemen, gebildet ist.

7. Stückgut-Transportvorrichtung nach Anspruch 1, dadurch gekennzeichnet, dass jede Antriebsanordnung (30, 34, 36, 40 ; 32, 34, 38, 42) wenigstens eine, auf die Mitnehmer (14) einwirkende Nockenscheibe (34) aufweist.

8. Stückgut-Transportvorrichtung nach Anspruch 7, dadurch gekennzeichnet, dass die Führung (12, 78, 80) im Bereich der Nockenscheiben (34) diese mit radialem Abstand umgreift um die Mitnehmer (14) in Eingriff mit den Nockenscheiben (34) zu halten.

9. Stückgut-Transportvorrichtung nach Anspruch 8, dadurch gekennzeichnet, dass die Nockenscheiben (34) ein sägezahnartiges Umfangsprofil (84) aufweisen, deren steile Flanken (86) in Drehrichtung (A) gesehen vorlaufend sind.

10. Stückgut-Transportvorrichtung nach Anspruch 9, dadurch gekennzeichnet, dass jeder steilen Flanke (86) eine Vertiefund (82) unmittelbar vorgelagert ist, die dazu bestimmt ist, ein gegengleich an jedem Mitnehmer (14) angeformtes Mitnahmeorgan (20) in sich aufzunehmen.

11. Stückgut-Transportvorrichtung nach Anspruch 7 und 10 dadurch gekennzeichnet, dass je eine Nockenscheibe (34) und Mitnahmeorgane (20) der Mitnehmer (14) zu beiden Seiten des Federelementes (16) angeordnet sind.

## Claims

1. An endless circulating conveyor device for goods in pieces, in particular for printed products, comprising a number of carriers (14) circulating within a guide and coupled to one another by means of a traction coupling, which are driven at the beginning and at the end of their effective conveying run by individually controllable driving means (34, 40, 42) and may be set in their relative positions for the purpose of adjusting the take-over cycle independently of the discharge cycle, characterised in that the traction coupling between the individual carriers (14) is formed by an elastically contractible and extensible spring element (16).

2. A conveyor device for goods in pieces according to claim 1, characterised in that the carriers (14) are slidably mounted in the guide (12, 50, 78).

3. A conveyor device for goods in pieces according to claim 1, characterised in that the spring element (16) is a flexing spring.

4. A conveyor device for goods in pieces according to claim 3, characterised in that the flexing spring has a curvature with at least one peak between two adjacent carriers (14).

5. A conveyor device for goods in pieces according to claim 3, characterised in that the flexing spring is formed by a section of an endless belt (16) which is deformed to a wave shape by fastening elements (13, 64, 66) arranged on the carriers (14).

6. A conveyor device for goods in pieces according to claim 5, characterised in that the endless belt (16) is formed by a rubber belt provided with an insert, e.g. a toothed belt.

7. A conveyor device for goods in pieces according to claim 1, characterised in that each driving system (30, 34, 36, 40 ; 32, 34, 38, 42) has at least one cam plate (34) acting on the carriers (14).

8. A conveyor device for goods in pieces according to claim 7, characterised in that in the region of the cam plates (34) the guide (12, 78, 80) embraces them with radial spacing to keep the carriers (14) in engagement with the cam plates (34).

9. A conveyor device for goods in pieces according to claim 8, characterised in that the cam plates (34) have a sawtooth-like peripheral outline (84) the steep sides (86) of which are leading as seen in the direction of rotation (A).

10. A conveyor device for goods in pieces according to claim 9, characterised in that each steep side (86) is directly preceded by a depression (82) which is intended to accommodate in it a mating entraining member (20) formed integrally with each carrier (14).

11. A conveyor device for goods in pieces according to claims 7 and 10, characterised in that one cam plate (34) and entraining members (20) of the carriers (14) are arranged on each side of the spring element (16) in each case.

## Revendications

1. Dispositif transporteur sans fin pour le transport d'objets, notamment pour produits d'imprimerie, comportant un certain nombre d'entraîneurs (14) circulant dans un guidage, couplés l'un à l'autre au moyen d'une liaison d'accrochage, lesquels entraîneurs sont actionnés au commencement et à la fin de leur section transporteuse active respectivement par un dispositif d'actionnement (34, 40, 42) pouvant être commandé individuellement, et peuvent être positionnés l'un par rapport à l'autre pour régler le rythme de réception indépendamment du rythme d'alimentation, caractérisé en ce que la liaison d'accrochage entre les entraîneurs individuels (14) est constituée par un élément à ressort (16) pouvant se raccourcir ou s'allonger.

2. Dispositif transporteur pour le transport d'objets selon la revendication 1, caractérisé en ce que les entraîneurs (14) sont montés coulissants dans le guidage (12, 50, 78).

3. Dispositif transporteur pour le transport d'objets selon la revendication 1, caractérisé en ce que l'élément à ressort (16) est un ressort de flexion.

4. Dispositif transporteur pour le transport d'objets selon la revendication 3, caractérisé en ce que le ressort de flexion présente entre deux entraîneurs (14) voisins une courbure ayant au moins un sommet.

5. Dispositif transporteur pour le transport d'objets selon la revendication 3, caractérisé en ce que le ressort de flexion est constitué par un segment d'une bande sans fin (16) qui est déformée de façon sinueuse par des éléments de fixation (18, 64, 66) disposés sur les entraîneurs (14).

6. Dispositif transporteur pour le transport d'objets selon la revendication 5, caractérisé en ce que la bande sans fin est constituée par une bande de caoutchouc muni d'un insert, par exemple une courroie crantée.

7. Dispositif transporteur pour le transport d'objets selon la revendication 1, caractérisé en ce que chaque agencement d'actionnement (30, 34, 36, 40 ; 32, 34, 38, 42) comporte au moins un disque came (34) agissant sur les entraîneurs (14).

8. Dispositif transporteur pour le transport d'objets selon la revendication 7, caractérisé en ce que, dans la région des disques cames (34), le guidage (12, 78, 80) entoure ceux-ci à une certaine distance radiale pour maintenir les entraîneurs (14) en prise avec les disques cames (34).

9. Dispositif transporteur pour le transport d'objets selon la revendication 8, caractérisé en ce que les disques cames (34) ont un profil périphérique (84) en dents de scie, dont les flancs verticaux (86) sont en avant dans le sens de la rotation (A).

10. Dispositif transporteur pour le transport d'objets selon la revendication 9, caractérisé en ce qu'immédiatement avant chaque flanc vertical (86) est prévue une cavité (82) qui est destinée à recevoir un organe d'entraînement (20) de forme conjuguée formé sur chaque entraîneur (14).

11. Dispositif transporteur pour le transport d'objets selon les revendications 7 et 10, caractérisé en ce qu'un disque came (34) et les organes d'entraînement (20) des entraîneurs (14) sont disposés de chaque côté de l'élément à ressort (16).

Fig.1

EP 0 309 702 B1

Fig.3

Fig.2

Fig.4

Fig.5